# EUROPEAN PATENT APPLICATION

(11) **EP 3 352 530 A1**
(43) Date of publication of application: **25.07.2018**
(21) Application number: 17163672.3
(22) Date of filing: 29.03.2017
(51) Int. Cl.: H05B 33/08, H05B 37/02

(54) **AUTOMATIC LIGHT CONTROL DEVICES AND SOCKETS**

(30) Priority: 20.01.2017 US 201715411133
(71) Applicant: Guangdong BESTEK E-commerce Co., Ltd, Shenzhen City, Guangdong Province (CN)
(72) Inventor: XU, Xinhua, Shenzhen City, Guangdong Province (CN)
(74) Representative: Jeannet, Olivier

(57) **Abstract**

The present disclosure relates to a socket including a housing, a plate, an indicator lamp (30) configured to indicate an operation sate of the socket, a detector (40) for detecting an ambient brightness, and a circuit board. The plate is configured with at least one interface (22) connecting with at least one external device. The circuit board is configured with a light control module (51) electrically connecting to the indicator lamp (30). The light control device electrically connects to the detector (40). The light control device controls a lighting brightness of the indicator lamp (30) to change in the same direction in accordance with a change of the ambient brightness detected by the detector (40); and the plate, the detector (40), the indicator lamp (30), and the circuit board are respectively arranged within the housing.

## Description

### BACKGROUND

### 1. Technical Field

The present disclosure generally relates to home appliances, and especially relates to an automatic light control device and a socket.

### 2. Description of Related Art

With the technology development, sockets are indispensable electrical appliances. The sockets connect to public power systems so as to connect to other appliances, such as TV, fans, cell phone chargers, etc. For the sake of safety, generally, the electrical appliances and the sockets are separated when the electrical appliances are in the non-operation period. During the operation period, the electrical appliances engage with the sockets so as to be electrically connected. During the daytime or being irradiated by lamps, it is easy to engage the electrical appliance with the socket. However, the engaging process may not be so easy during the nighttime or in a dark environment. To this end, CN201904520U, which is granted on July 20, 2011, relates to a socket with an indicator lamp, wherein the technical solution contributes to the engaging process in the dark environment.

To illuminate a rim of the socket in the dark environment, a brightness of the indicator lamp is usually relatively bright, however, the brightness may cause troubles in the nighttime or in the dark environment when users rest.

### SUMMARY

The present disclosure relates to an automatic light control device and a socket to avoid the troubles caused by the brightness of the indicator lamp to the users in the nighttime or in the dark environment.

In one aspect, a light control device includes: an indicator lamp indicating an operation state of the light control device; a detector configured to detect an ambient brightness; a light control module electrically connecting to the indicator lamp, the light control module electrically connects to the detector, and the light control module is configured to control a lighting brightness of the indicator lamp to change in the same direction as the change of the ambient brightness detected by the detector.

Wherein the light control module further includes: a central processing unit (CPU); a display circuit electrically connecting to the CPU, the display circuit electrically connects to the indicator lamp; a first detection circuit electrically connecting to the CPU, the first detection circuit electrically connects to the detector, the first detection circuit is configured to receive ambient brightness detected by the detector, to convert the ambient brightness detected by the detector into electrical signals, to process the electrical signals by the CPU, and to transmit the processed electrical signals to the display circuit; the display circuit controls the indicator lamp in accordance with the processed electrical signals such that the lighting brightness of the indicator lamp changes in the same direction as the change of the ambient brightness detected by the detector.

Wherein the light control device includes a second detection circuit and at least one interface, and the second detection circuit is configured to detect a loading of the interface.

Wherein the light control device includes a protection circuit, when the second detection circuit determines the loading of the interface is greater than a default loading, the protection circuit shuts down the interface.

Wherein the light control device supplies power to at least one external device via at least one interface, the light control device includes a third detection circuit, when the third detection circuit determines an electrical amount of the loading charge connected with the light control device is full, the light control module controls the indicator lamp to emit lighting beams of different color.

Wherein the light control device supplies power to at least one external device via at least one interface, the light control device includes a fourth detection circuit and a speaker, the fourth detection circuit electrically connects to the light control device, the speaker electrically connects to the light control device, when the fourth detection circuit determines an electrical amount of the loading charge connected with the light control device is full, the light control module controls the speaker to display a hint sound.

In another aspect, a socket includes: a housing; a plate configured with at least one interface connecting with at least one external device; an indicator lamp configured to indicate an operation sate of the socket; a detector configured to detect an ambient brightness; a circuit board configured with a light control module electrically connecting to the indicator lamp, the light control device electrically connects to the detector, and the light control device controls a lighting brightness of the indicator lamp to change in the same direction in accordance with a change of the ambient brightness detected by the detector; and the plate, the detector, the indicator lamp, and the circuit board are respectively arranged within the housing.

In the embodiment, the indicator lamp electrically connects to the light control module on the circuit board, the light control module further electrically connects to the detector such that the detector feedbacks the detected ambient brightness to the light control module. The light control module controls an operation of the indicator lamp in accordance with the detected ambient brightness. Specifically, the light control module controls a lighting brightness of the indicator lamp to change in the same direction as the change of the ambient brightness. That is, when the detected ambient brightness transits to a lower state, the light control module receives signals indicating that the detected ambient brightness transits from a higher state to the lower state. The light control module controls the lighting brightness of the indicator lamp to transit from the higher state to the lower state also. For instance, from the daytime to the nighttime, the ambient brightness transits from the higher state to the lower state. In the daytime, in response to the ambient brightness detected by the light control module, the light control module configures the indicator lamp to be in a high brightness state such that user may be able to detect the light beams emitted from the indicator lamp. During the transition from the daytime to the nighttime, the ambient brightness transits from the higher state to the lower state, and the ambient brightness detected by the detector is provided to the light control module. The light control module configures the lighting brightness of the indicator lamp in accordance with the change of the detected ambient brightness, from the higher brightness to the lower brightness, such that the lighting brightness of the indicator lamp changes along with the ambient brightness in the same direction. Thus, even in the dark environment, the lighting brightness from the indicator lamp is very low so as to reduce the impact caused by the lighting brightness of the indicator lamp toward the users. When the user needs to use the first socket in the dark environment, the user may still engage the socket with other devices by the light beams emitted by the indicator lamp. When the ambient brightness detected by the detector is from the higher state to the lower state, the light control module receives the signals from the detector indicating that the ambient brightness transits from the darker state to the higher state, and the light control module controls the lighting brightness of the indicator lamp to transit to the higher state. As such, the user may observe the state of the indicator lamp even in the daytime so as to understand the electrified state of the first socket.

At the same time, when the ambient brightness transits to the lower state, the lighting brightness of the indicator lamp also transits to the lower state, and the power consumption of the indicator lamp is decreased so as to conserve the power consumption.

### BRIEF DESCRIPTION OF THE DRAWINGS

Many aspects of the present embodiments can be better understood with reference to the following drawings. The components in the drawings are not necessarily drawn to scale, the emphasis instead being placed upon clearly illustrating the principles of the present embodiments. Moreover, in the drawings, all the views are schematic, and like reference numerals designate corresponding parts throughout the several views.
FIG. 1 is a schematic view of the socket in accordance with one embodiment.
FIG. 2 is a schematic view of a first module of the protection circuit in accordance with one embodiment.
FIG. 3 is a schematic view of a second module of the protection circuit in accordance with one embodiment.
FIG. 4 is a schematic view of a second module of the protection circuit in accordance with one embodiment.
FIG. 5 is a schematic view of the second module of the first socket in accordance with one embodiment.
FIG. 6 is an exploded view of the socket of the first socket in accordance with one embodiment.
FIG. 7 is a schematic view of the second socket in accordance with one embodiment.
FIG. 8 is an exploded view of the second socket in accordance with one embodiment.
FIG. 9 is an exploded view of the second socket of FIG. 8 in another aspect.

### DETAILED DESCRIPTION

The disclosure is illustrated by way of example and not by way of limitation in the figures of the accompanying drawings, it will be apparent that various changes may be made thereto without departing from the spirit and scope of the invention or sacrificing all of its material advantages.

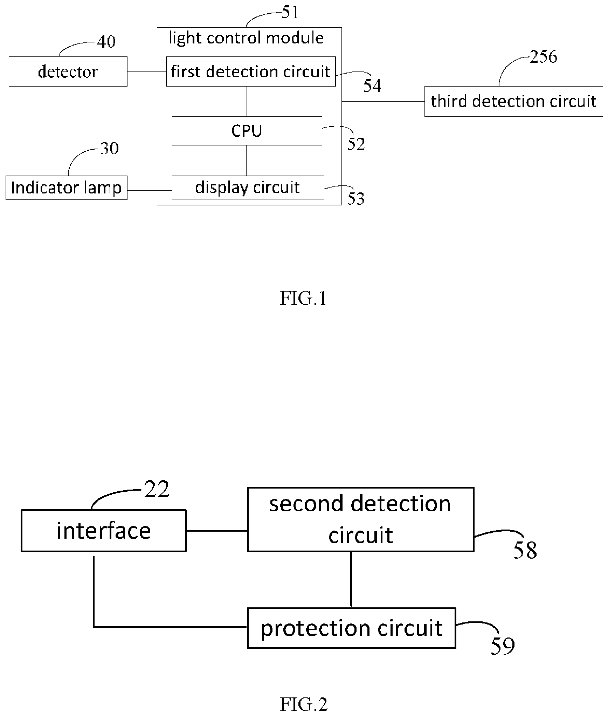

As shown in FIGS. 1-3 and FIGS. 5-6, a first socket 100 including a housing 10, a plate 20 arranged within the house 10, an indicator lamp 30 arranged within the housing 10, a detector 40 arranged within the housing 10, and a circuit board 50 arranged within the housing 10. The plate 20 is configured with an interface 22 for engaging with an external device. The indicator lamp 30 is configured to indicate an operation state of the first socket 100, the detector 40 is configured to detect an ambient brightness, the circuit board 50 is configured with a light control module 51 electrically connecting to the indicator lamp 30. The light control module 51 electrically connects with the detector 40, and the light control module 51 controls a lighting brightness of the indicator lamp 30 to change in the same direction as change of the ambient brightness detected by the detector 40.

In the embodiment, the indicator lamp 30 electrically connects to the light control module 51 on the circuit board 50, the light control module 51 further electrically connects to the detector 40 such that the detector 40 feedbacks the detected ambient brightness to the light control module 51. The light control module 51 controls an operation of the indicator lamp 30 in accordance with the detected ambient brightness. Specifically, the light control module 51 controls a lighting brightness of the indicator lamp 30 to change in the same direction as the change of the ambient brightness. That is, when the detected ambient brightness transits to a lower state, the light control module 51 receives signals indicating that the detected ambient brightness transits from a higher state to the lower state. The light control module 51 controls the lighting brightness of the indicator lamp 30 to transit from the higher state to the lower state also. For instance, from the daytime to the nighttime, the ambient brightness transits from the higher state to the lower state. In the daytime, in response to the ambient brightness detected by the light control module 51, the light control module 51 configures the indicator lamp 30 to be in a high brightness state such that user may be able to detect the light beams emitted from the indicator lamp 30. During the transition from the daytime to the nighttime, the ambient brightness transits from the higher state to the lower state, and the ambient brightness detected by the detector 40 is provided to the light control module 51. The light control module 51 configures the lighting brightness of the indicator lamp 30 in accordance with the change of the detected ambient brightness, from the higher brightness to the lower brightness, such that the lighting brightness of the indicator lamp 30 changes along with the ambient brightness in the same direction. Thus, even in the dark environment, the lighting brightness from the indicator lamp 30 is very low so as to reduce the impact caused by the lighting brightness of the indicator lamp 30 toward the users. When the user needs to use the first socket 100 in the dark environment, the user may still engage the socket with other devices by the light beams emitted by the indicator lamp 30. When the ambient brightness detected by the detector 40 is from the higher state to the lower state, the light control module 51 receives the signals from the detector 40 indicating that the ambient brightness transits from the darker state to the higher state, and the light control module 51 controls the lighting brightness of the indicator lamp 30 to transit to the higher state. As such, the user may observe the state of the indicator lamp 30 even in the daytime so as to understand the electrified state of the first socket 100.

At the same time, when the ambient brightness transits to the lower state, the lighting brightness of the indicator lamp 30 also transits to the lower state, and the power consumption of the indicator lamp 30 is decreased so as to conserve the power consumption.

When the indicator lamp 30 is controlled by the light control module 51 to emit lighting brightness, the lighting brightness of the indicator lamp 30 may include two modes, i.e., a daytime mode and a nighttime mode. When the ambient brightness detected by the detector 40 is greater than a first default value, it is determined that the indicator lamp 30 is in the daytime mode. That is, the ambient brightness is in the higher state. Thus, the light control module 51 configures a lighting mode of the indicator lamp 30 is the daytime mode.

When the ambient brightness detected by the detector 40 is smaller than a second default value, it is determined that the indicator lamp 30 is in the nighttime mode. That is, the ambient brightness is in the lower state. Thus, the light control module 51 configures the lighting mode of the indicator lamp 30 is the nighttime mode.

Preferably, when the indicator lamp 30 is controlled by the light control module 51 to emit the lighting brightness, the lighting brightness of the indicator lamp 30 changes along with the ambient brightness, and a changed amount of the lighting brightness of the indicator lamp 30 is the same with the changed amount of the ambient brightness. Specifically, the detector 40 detects the change of the ambient brightness, the light control module 51 controls the lighting brightness of the indicator lamp 30 to change in the same direction and with the same amount with feedback of the ambient brightness detected by the detector 40. When the ambient brightness transits to the higher state, the light control module 51 controls the lighting brightness of the indicator lamp 30 to transits to the higher state.

When the ambient brightness transits to the lower state, the light control module 51 controls the lighting brightness of the indicator lamp 30 to transits to the lower state. With respect to the changed amount, the light control module 51 controls the lighting brightness of the indicator lamp 30 to change in the same amount as the changed amount of the ambient brightness. For instance, when the ambient brightness transits from the higher state, i.e., the daytime, to the lower state, i.e., the evening or the nighttime, the light control module 51 controls the lighting brightness of the indicator lamp 30 to transit from the higher state to the lower state. Further, the lighting brightness of the indicator lamp 30 is controlled to transit from the lower state to a lowest state. That is, when the ambient brightness gradually changes, the lighting brightness of the indicator lamp 30 is controlled by the light control module 51 to gradually change. When the ambient brightness gradually increases, the lighting brightness of the indicator lamp 30 is controlled by the light control module 51 to gradually increase. When the ambient brightness gradually decreases, the lighting brightness of the indicator lamp 30 is controlled by the light control module 51 to gradually decrease.

It is to be noted that the indicator lamp 30 may have other configurations in response to the control of the light control module 51. For instance, the light control module 51 configures the lighting brightness of the indicator lamp 30 to include N number of degrees, wherein N is greater than 2. In this way, the light control module 51 may control the lighting brightness of the indicator lamp 30 to be at the respective level in accordance with the ambient brightness detected by the detector 40.

It is to be noted that the light control module 51 not only can configure the lighting brightness of the indicator lamp 30, but also can configure the colors of the lighting brightness emitted by the indicator lamp 30. For instance, when the ambient brightness is in the higher state, the light control module 51 controls the indicator lamp 30 to emit the red lighting beams. When the ambient brightness is in the darker state, the light control module 51 controls the indicator lamp 30 to emit the blue lighting beams. It can be understood that the red lighting beams and the blue lighting beams emitted by the indicator lamp 30 are only examples of the present disclosure, and the present disclosure is not limited thereto. In an example, the indicator lamp 30 may also emit the yellow or purple light beams.

The light control module 51 includes a central processing unit (CPU) 52, a display circuit 53 electrically connecting to the CPU 52, a first detection circuit 54 electrically connecting to the CPU 52. The display circuit 53 electrically connects to the indicator lamp 30, the first detection circuit 54 electrically connects to the detector 40. The first detection circuit 54 is configured to receive the lighting brightness detected by the detector 40, to convert the ambient brightness detected by the detector 40 to electrical signals, to transmit the electrical signals to the CPU 52. The CPU 52 processes the electrical signals, and transmits the processed electrical signals to the display circuit 53. The display circuit 53 controls the indicator lamp 30 in accordance with the electrical signals such that the lighting brightness of the indicator lamp 30 changes along with the ambient brightness detected by the detector 40 in the same direction and with the same amount.

The first detection circuit 54 and the detector 40 are connected by conductive lines. The first detection circuit 54 connects to the CPU 52 by the conductive lines. It is to be noted that the first detection circuit 54 may connect to the detector 40 via a wireless connection, and the first detection circuit 54 may connect to the CPU 52 via the wireless connection. In addition, the first detection circuit 54 and the CPU 52 may be arranged on the circuit board 50.

The display circuit 53 and the indicator lamp 30 are connected by the conductive lines. The display circuit 53 connects to the CPU 52 by the conductive lines. It is to be noted that the display circuit 53 may connect to the indicator lamp 30 via a wireless connection, and the display circuit 53 may connect to the CPU 52 via the wireless connection. In addition, the display circuit 53 and the CPU 52 may be arranged on the circuit board 50.

Further, referring to FIGS. 1 and 2, the circuit board 50 includes a second detection circuit 58 and a protection circuit 59. The second detection circuit 58 detects a loading of the interface 22. When the loading of the interface 22 detected by the second detection circuit 58 is greater than a default loading, the protection circuit 59 shuts down the interface 22 such that the second detection circuit 58 and the protection circuit 59 prevents the interface 22 from burning out due to the overload.

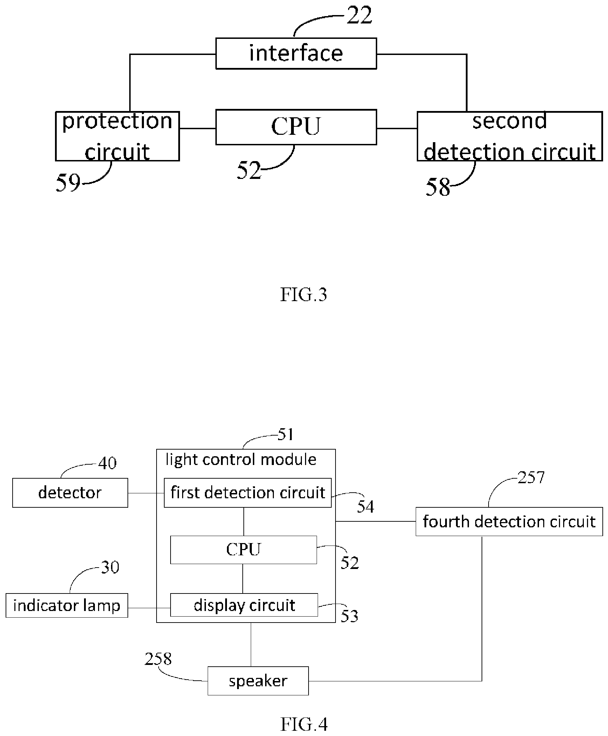

Referring to FIGS. 1 and 3, in another embodiment, the second detection circuit 58 connects to the CPU 52 and the interface 22. At the same time, the protection circuit 59 connects to the CPU 52 and to the interface 22. The second detection circuit 58 detects the loading of the interface 22. When the loading of the interface 22 detected by the second detection circuit 58 is greater than the default loading, the second detection circuit 58 transmits the electrical signals to the CPU 52. The CPU 52 processes the electrical signals, and transmits the processed electrical signals to the protection circuit 59. The protection circuit 59 shuts down the interface 22 such that the second detection circuit 58 and the protection circuit 59 prevents the interface 22 from burn out due to the overload.

The indicator lamp 30 includes a LED lamp. It is to be noted that the indicator lamp 30 is not limited to the LED lamp.

In one embodiment, the detector 40 includes, but not limited to, photo-resistors, photodiodes, and phototransistors.

It is to be noted that the control from the light control module 51 to the indicator lamp 30 is not limited to the socket 100, that is, such control may be applied to other devices. In an example, the light control module 51, the detector 40, and the indicator lamp 30 are configured within a charger, an adapter, or an inverter.

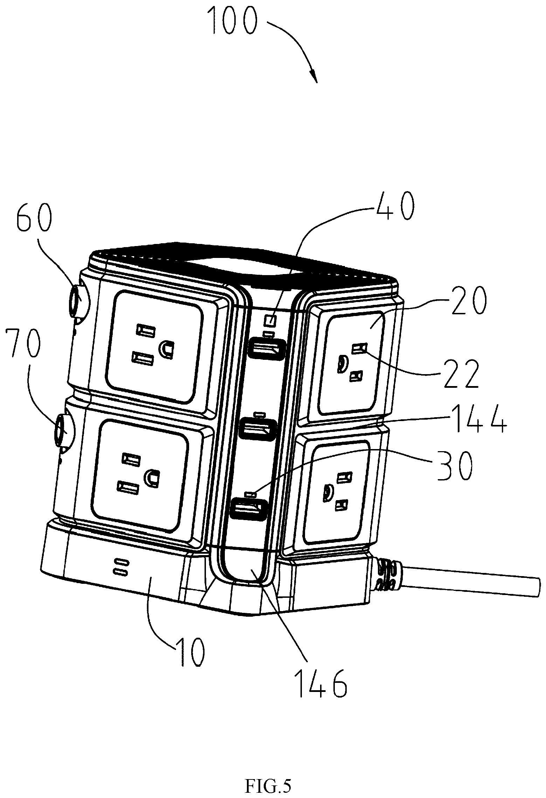

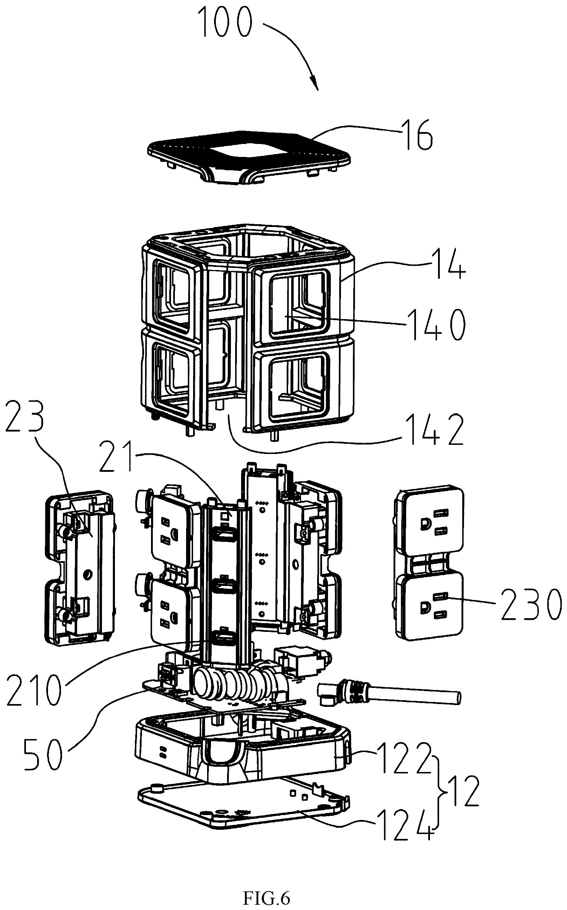

As shown in FIGS. 5 and 6, the housing 10 of the first socket 100 includes a base 12, a frame 14, and a top cover 16, the frame 14 is arranged between the top cover 16 and the base 12, and the base 12 carries the top cover 16 and the frame 14.

The base 12 and the frame 14 are connected in a fix configuration. Specifically, edges of one ends of the base 12 and the frame 14 may be detached from each other. In one embodiment, the base 12 and the frame 14 are connected via screws, which can be fixed and detached easily. It is to be noted that the present disclosure is not limited to screws. For instance, the base 12 and the frame 14 may be clasped with each other.

In the embodiment, the base 12 includes a first base 124 and a second base 122 connected together, and the first base 124 is arranged below the second base 122. The circuit board 50 is arranged on the first base 124, and the circuit board 50 is arranged within the second base 122. The first base 124 and the second base 122 may be fixed or detached by the screws. Specifically, the first base 124, the second base 122, and the frame 14 may be engaged by the same screw. It can be understood that this is only one configuration between the base 12 and the frame 14, and the present disclosure is not limited thereto. In an example, the second base 122 and the first base 124 are integrally formed. Alternatively, the first base 124 and the second base 122 may be clasped with each other.

An external surface of the first base 124 opposite to the bottom of the first base 124 is configured with a plurality of non-slip mats arranged on the external surface with uniform configuration.

The top cover 16 connects to the frame 14. Specifically, edges of one end of the top cover 16 and the frame 14 may be detached from each other. The top cover 16 and the frame 14 are fixed by the screws, which can be fixed and detached easily. It is to be noted that the present disclosure is not limited to screws. For instance, the top cover 16 and the frame 14 may be clasped with each other.

The first socket 100 includes at least one plate 20. In other embodiments, the first socket 100 may include more than one plate 20. In an example, an interface 22 is configured when the first socket 100 includes only one plate 20, and the indicator lamp 30 and the detector 40 are arranged on the plate 20 or arranged on other locations. In another example, the plate 20 may be arranged on the top cover 16, or on the frame 14. When the first socket 100 includes at least two plates 20, the two plates 20 are arranged in a rim of the frame 14, and the plates 20 are spaced apart from each other.

Wherein at least one of the two plates 20 is configured with the detector 40.

Wherein at least one of the two plates 20 is configured with the indicator lamp 30.

Preferably, when the first socket 100 includes at least two plates 20, at least one of the plates 20 is configured with the indicator lamp 30 and the detector 40. As the indicator lamp 30 and the detector 40 are arranged on the same plate 20, it is easy to conduct the detection and to display the detection result. In addition, such design contributes to the configuration of the internal circuit.

The plate 20 includes a first plate 21 having a first interface first interface 210 and a second plate 23 having a second interface 230. The first interface 210 may engage with a plug having two pins or engage with the plug having three pins. Alternatively, the first interface 210 may be an USB interface. In one embodiment, the first interface 210 is configured as the USB interface, and the second interface 230 may engage with the plug having two pins. The second interface 230 may also engage with the plug having three pins. In one embodiment, the first plate 21 is configured with at least one first interface 210. Further, the first plate 21 is configured with three first interfaces 210, and the first interfaces 210 are spaced apart from each other. The indicator lamp 30 and the detector 40 are arranged at one end portion of the first plate 21. When the first plate 21 is fixed on the frame 14, the indicator lamp 30, the detector 40, and the top cover 16 are adjacent to each other. Such configuration contributes to the users' operations. It is to be noted that the indicator lamp 30 and the detector 40 may be respectively configured in a middle portion, on the other end or other locations.

In the embodiment, the first socket 100 includes two first plates 21 arranged on the frame 14, and the two first plates 21 are opposite to each other. It is to be noted that the first socket 100 may include one first plate 21, three first plates 21, or more than three first plates 21. Further, the first socket 100 includes four second plates 23, and the four second plates 23 are spaced apart from each other, wherein two second plates 23 are configured at one side of the two first plates 21, and the other two second plates 23 are configured at the other side of the first plates 21. The two adjacent second plates 23 form a corner, and the first plate 21 and the second plate 23 form the corner. It is to be noted that the number of the second plate 23 is not limited to the above. For instance, the number of the second plate 23 may be one, two, three, five, or more than five. In the embodiment, the second plate 23 includes at least one second interface 230. Preferably, the second plate 23 includes two second interfaces 230, and the first socket 100 may electrically connect to two devices via one second plate 23.

The frame 14 includes an opening 142 receiving the first plate 21, and the first plate 21 inserts into the opening 142 via the end portion of the opening 142. The inserting end of the opening 142 is adjacent to the base 12. Correspondingly, the base 12 includes an inclined surface 146 engaging with the first plate 21 such that the first plate 21 may be easily inserted into the opening 142.

The frame 14 is configured with a through hole 140 for receiving the second interface 230. The second interface 230 may be arranged within the through hole 140 from an internal of the frame 14. Specifically, the two second interfaces 230 of the second plate 23 include two portions. Correspondingly, two through holes 140 are configured to engage with one second plate 23, wherein one through hole 140 receives one second interface 230 such that the two second interfaces 230 on the same second plate 23 are spaced apart. Further, the frame 14 is configured with a circular groove 144 such that the circular groove 144 is between two through holes 140.

The first socket 100 further includes a first switch 60 controlling sockets on a first layer and a second switch 70 controlling sockets on a second layer. Specifically, the first switch 60 and the second switch 70 are adjacent to each other, and the first switch 60 and the second switch 70 are arranged on the frame 14. Further, the first switch 60 and the second switch 70 are arranged on a corner of the frame 14, and the first switch 60 and the second switch 70 are between two second plates 23. It is to be noted that the locations of the first switch 60 and the second switch 70 are not limited to the above. In an example, the first switch 60 and the second switch 70 are spaced apart, and the first switch 60 and the second switch 70 are adjacent in other locations.

In the embodiment, the sockets on the first layer of the first plate 21 and the second plate 23 are arranged above the circular groove 144. The sockets on the second layer of the first plate 21 and the second plate 23 are arranged below the circular groove 144. The first interface 210 of the first plate 21 and the second interface 230 of the second plate 23 are collectively referred to as the sockets.

Wherein the first socket 100 further includes a heat sink disposed within the housing 10. The heat sink may contribute to heat dissipation, that is, the heat within the socket 100 can be quickly dissipated. Thus, the first socket 100 is prevented from being damaged due to overheating. Further, a plurality of heat dissipation holes may be provided on the heat sinks to further enhance the heat dissipation effect.

In the embodiment, the plugs of the first socket 100 electrically connect to the circuit board 50 via the conductive lines, and the plugs connect to the housing 10 via the conductive lines.

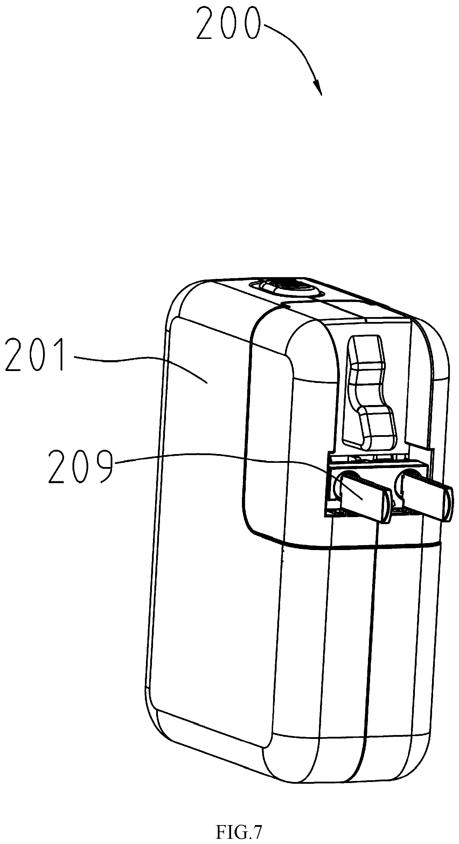

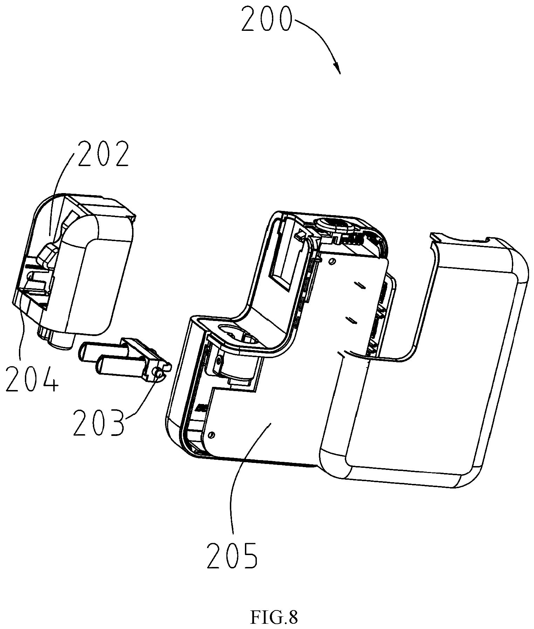

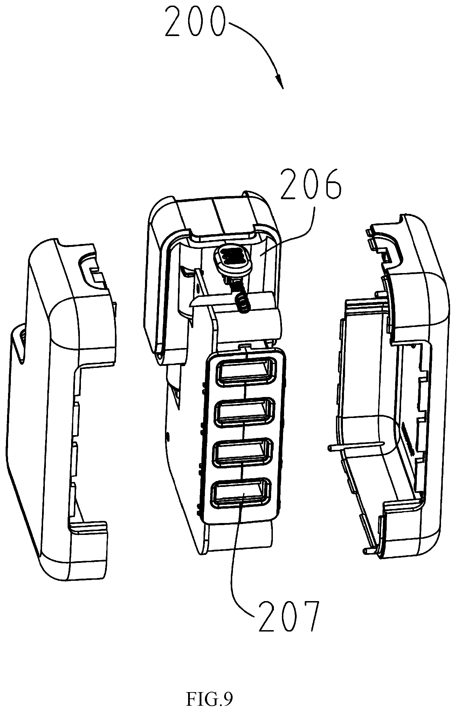

The present disclosure also relates to a second socket 200, as shown in FIGS. 1, 4, and 7-9. The structure of the second socket 200 is the same with the structure of the first socket 100, and the functions of the second socket 200 are similar to that of the first socket 100. The difference between the first socket 100 and the second socket 200 resides in that: pins 209 of the second socket 200 electrically connects to a circuit board 205 by the conductive lines. In addition, the pins 209 may be directly fixed on the housing 201. The housing 201 is configured with a receiving slot 202 for receiving the pins 209. The pins 209 are fixed on the housing 201, and the pins 209 are rotatable with respect to the housing 201. Specifically, the pins 209 are configured with a rotation axis 203. The housing 201 is also configured with an axis hole 204 on the rotation axis 203. The rotation axis 203 is received within the axis hole 204, and the rotation axis 203 may rotate within the axis hole 204 such that the pins 209 rotate until being received within the receiving slot 202 of the housing 201. It is to be noted that the rotation axis 203 arranged on the pins 209 contributes to the rotatable connection between the pins 209 and the housing 201. It can be understood that the rotation configuration of the pins 209 is not limited to the above. For instance, an external rotatable axis passes through the pins 209 and the housing 201 such that the pins 209 may rotate with respect to the rotation axis, which also contributes to the engagement between the pins 209 and the receiving slot 202.

The second socket 200 is configured with a battery electrically connecting to the circuit board 205. Specifically, the battery is a rechargeable battery. In addition, the interface includes the USB interface 207, and the second socket 200 is configured with the rechargeable battery 206. The interface of the second socket 200 includes the USB interface 207. With such configuration, when the pins 209 of the second socket 200 are not connected with public power system, the USB interface 207 may be adopted to charge the devices having the USB interface, such as cellular phones, speakers, and PAD.

In the embodiment, the second socket 200 is configured to provide power to at least one external device. The second socket 200 includes a third detection circuit 256 electrically connecting to the light control module 51. When the third detection circuit 256 determines that a secondary electrical amount connected with the second socket 200 is full, the light control module 51 controls the indicator lamp 30 to emit the lighting beams of different color.

In other embodiments, the second socket 200 provides at least one loading charge. The second socket 200 includes a fourth detection circuit 257 and a speaker 258. The fourth detection circuit 257 electrically connects to the light control module 51, and the speaker 258 electrically connects to the light control module 51. When the fourth detection circuit 257 determines that the secondary electrical amount connected with the second socket 200 is full, the light control module 51 controls the speaker 258 to display a hint sound.

Although the features and elements of the present disclosure are described as embodiments in particular combinations, each feature or element can be used alone or in other various combinations within the principles of the present disclosure to the full extent indicated by the broad general meaning of the terms in which the appended claims are expressed.

## Claims

1. A light control device, comprising,
an indicator lamp (30) indicating an operation state of the light control device;
a detector (40) configured to detect an ambient brightness;
a light control module (51) electrically connecting to the indicator lamp (30), the light control module (51) electrically connects to the detector (40), and the light control module (51) is configured to control a lighting brightness of the indicator lamp (30) to change in the same direction as the change of the ambient brightness detected by the detector (40).

2. The light control device as claimed in claim 1, wherein the light control module (51) further comprises:
a central processing unit, CPU, (52);
a display circuit (53) electrically connecting to the CPU (52), the display circuit (53) electrically connects to the indicator lamp (30);
a first detection circuit (54) electrically connecting to the CPU (52), the first detection circuit (54) electrically connects to the detector (40), the first detection circuit (54) is configured to receive ambient brightness detected by the detector (40), to convert the ambient brightness detected by the detector (40) into electrical signals, to process the electrical signals by the CPU (52), and to transmit the processed electrical signals to the display circuit (53);
the display circuit (53) controls the indicator lamp (30) in accordance with the processed electrical signals such that the lighting brightness of the indicator lamp (30) changes in the same direction as the change of the ambient brightness detected by the detector (40).

3. The light control device as claimed in claim 2, wherein the light control device comprises a second detection circuit (58) and at least one interface (22), and the second detection circuit (58) is configured to detect a loading of the interface (22).

4. The light control device as claimed in claim 3, wherein the light control device includes a protection circuit (59), when the second detection circuit (58) determines the loading of the interface (22) is greater than a default loading, the protection circuit (59) shuts down the interface (22).

5. The light control device as claimed in claim 2, wherein the light control device is configured to supply power to at least one external device via at least one interface (22), the light control device comprises a third detection circuit, when the third detection circuit determines an electrical amount of the loading charge connected with the light control device is full, the light control module (51) controls the indicator lamp (30) to emit lighting beams of different color.

6. The light control device as claimed in claim 2, wherein the light control device is configured to supply power to at least one external device via at least one interface (22), the light control device comprises a fourth detection circuit and a speaker, the fourth detection circuit electrically connects to the light control device, the speaker electrically connects to the light control device, when the fourth detection circuit determines an electrical amount of the loading charge connected with the light control device is full, the light control module (51) controls the speaker to display a hint sound.

7. A socket, comprising:
a housing;
a plate configured with at least one interface connecting with at least one external device;
an indicator lamp (30) configured to indicate an operation sate of the socket;
a detector (40) configured to detect an ambient brightness;
a circuit board configured with a light control module (51) electrically connecting to the indicator lamp (30), the light control module (51) electrically connects to the detector (40), and the light control module (51) controls a lighting brightness of the indicator lamp (30) to change in the same direction in accordance with a change of the ambient brightness detected by the detector (40); and
the plate, the detector (40), the indicator lamp (30), and the circuit board are respectively arranged within the housing.

8. The socket as claimed in claim 7, wherein the housing comprises a base, a frame (14), and
a top cover, the top cover is fixed with the frame (14), the frame (14) is arranged between the top cover and the base;
the housing comprises at least two plates, the two plates are arranged in a rim of the frame (14), and the two plates are spaced apart from each other.

9. The socket as claimed in claim 8, wherein at least one of the two plates is configured with
the detector (40) and/or the indicator lamp (30).

10. The socket as claimed in claim 8, wherein the plate comprises a first plate (21) having a first interface (210) and a second plate (23) having a second interface (230), the frame (14) is configured with an opening for receiving the first plate (21), and the first plate (21) inserts into
the opening from an end portion of the opening, and wherein the frame (14) is configured with a through hole for receiving the second interface (230), and the second interface (230) is arranged within the through hole via an internal of the frame (14).

11. The socket as claimed in claim 8, wherein the base comprises a first base and a second base,
the first base is arranged on the second base, and the circuit board is fixed on the second base.

12. The socket as claimed in claim 7, wherein the light control module (51) comprises:
a central processing unit (CPU (52));
a display circuit (53) electrically connecting to the CPU (52), the display circuit (53) electrically connects to the indicator lamp (30);
a first detection circuit (54) electrically connecting to the CPU (52), the first detection circuit (54) electrically connects to the detector (40), the first detection circuit (54) is configured to receive ambient brightness detected by the detector (40), to convert the ambient brightness detected by the detector (40) into electrical signals, to process the electrical signals by the CPU (52), and to transmit the processed electrical signals to the display circuit (53);
the display circuit (53) controls the indicator lamp (30) in accordance with the processed electrical signals such that the lighting brightness of the indicator lamp (30) changes in the same direction as change of the ambient brightness detected by the detector (40).

13. The socket as claimed in claim 12, wherein the socket comprises a second detection circuit (58) arranged on the circuit board and at least one interface (22), and the second detection circuit (58) is configured to detect a loading of the interface (22).

14. The socket as claimed in claim 12, wherein the socket includes a protection circuit (59) arranged on the circuit board, when the second detection circuit (58) determines the loading of the interface (22) is greater than a default loading, the protection circuit (59) shuts down the interface (22).

15. The socket as claimed in claim 12, wherein the socket is configured to supply power to at least one external device via at least one interface (22), and the socket comprises a third detection circuit arranged on the circuit board, when the third detection circuit determines an electrical amount of the loading charge connected with the socket is full, the light control module (51) controls the indicator lamp (30) to emit lighting beams of different color.

16. The socket as claimed in claim 12, wherein the socket is configured to supply power to at least one external device via at least one interface (22), the socket comprises a fourth detection circuit arranged on the circuit board and a speaker, the fourth detection circuit electrically connects to the light control module (51), the speaker electrically connects to the light control module (51), when the fourth detection circuit determines an electrical amount of the loading charge connected with the socket is full, the light control module (51) controls the speaker to display a hint sound.
